# EUROPEAN PATENT APPLICATION

(11) **EP 4 361 296 A1**
(43) Date of publication of application: **01.05.2024**
(21) Application number: 22203868.9
(22) Date of filing: 26.10.2022
(51) Int. Cl.: C22B 5/04, C22B 7/00, C22B 3/00, C22B 26/12, C22B 47/00, C01G 45/00, C01G 51/00, C01G 53/00, H01M 10/54

(54) **MECHANOCHEMICALLY INDUCED HIGH-EFFICIENT METHOD FOR RECYCLING D-ELEMENTS FROM LI-ION BATTERY WASTES**

(71) Applicant: Karlsruher Institut für Technologie, 76131 Karlsruhe (DE)
(72) Inventor: DOLOTKO, Oleksandr, 76149 Karlsruhe (DE); KNAPP, Michael, 76185 Karlsruhe (DE); EHRENBERG, Helmut, 64291 Darmstadt (DE)
(74) Representative: Müller-Boré & Partner Patentanwälte PartG mbB

(57) **Abstract**

The present invention relates to a method for recycling transition metals from Li-ion batteries. Specifically, the present invention relates to a highly efficient method for recycling transition metals from Li-ion batteries via mechanochemical reduction of the transition metals and leaching.

## Description

The present invention relates to a method for recycling transition metals from Li-ion (lithium-ion) batteries. Specifically, the present invention relates to a highly efficient method for recycling transition metals from Li-ion batteries via mechanochemical reduction of the transition metals and leaching.

Following the development of lithium-ion batteries (LIBs) as energy storage devices, their demand in our daily life and in many industries is rapidly increasing. The common usage of LIBs, however, leads to a large number of LIBs being produced and disposed as waste which highlights the importance of waste recycling and reuse. If handled not properly, battery wastes have a significantly negative impact on the environment and resources on the planet. In addition, LIBs contain valuable and nonrenewable resources, such as Li (lithium), Co (cobalt), Ni (nickel), and Mn (manganese), which are limited and costly to produce. Therefore, battery recycling has significant economic, strategic, and environmental benefits. However, as the massive production of LIBs has started relatively recently, their recycling technology remains currently in its infancy, and the safe and economic recovery of all valuable elements represents a considerable technological challenge.

Currently, the most developed technologies for recycling spent LIBs are based on pyrometallurgical or hydrometallurgical processes, which are usually coordinated.

In the pyrometallurgical methods, the spent LIBs are smelted at high temperatures to obtain alloys containing multiple metals. As the next step, the alloy's valuable components are recovered using hydrometallurgical processes. Unfortunately, in pyrometallurgical processes, many useful elements, such as lithium and carbon/graphite, organic electrolyte, and binder, are usually burnt off, which causes exceptionally high energy consumption and emission of hazardous gases.

By contrast, hydrometallurgical processes have attractive advantages such as high metal recovery rates, high product purity, low energy consumption, and minimal gas emission.

In a typical hydrometallurgical process, leaching is a key step for recovering valuable metals from spent LIBs. The aim of leaching is to convert the metals in the cathode active materials (CAMs) obtained from a pretreatment process to ions in a solution. Further, the metals can be recovered in the following procedures by a series of chemical methods, such as precipitation, solvent extraction, and electrolytic deposition. The most effective leaching of CAMs is carried out by using inorganic acids. In this context, the most commonly used inorganic acids are e.g., H₂SO₄, HCl, and HNO₃. Leaching procedures with inorganic acids followed by precipitation and/or solvent extraction obtain the desired products with high recycling efficiencies.

Unfortunately, the high recycling rates can only be achieved by using high quantities of acids in high concentrations, heating, and further addition of reducing agents. Consequently, high amounts of corrosive wastes and hazardous gas emissions (such as Cl₂) are produced. Moreover, the high costs of the chemicals for acidic digestion and subsequent neutralization exceed the intrinsic metal value of the LIB wastes by far.

The state-of-the-art leaching technology, which converts the metals in the CAMs to their solutions, utilizes inorganic acids in high concentrations in combination with reducing agents and elevated temperatures. Some exemplary conditions of major recovery processes are listed in Table 1.

In the processes shown in Table 1, several chemical reactions during the leaching of CAMs, such as LiMO₂ cathodes (M = Co, Ni, Mn), occur as shown by the following reactions (1) to (3):

LiMO₂ + 4HNO₃ → LiNO₃ + M(NO₃)₂ + NO↑ + O₂↑ + 2H₂O (1)

2LiMO₂ + 3H₂SO₄ + 3H₂O₂ → 2MSO₄ + Li₂SO₄ + 2O₂↑ + 6H₂O (2)

2LiMO₂ + 8HCl → 2MCl₂ + 2LiCl + 4H₂O + Cl₂↑ (3)

**Table 1. Examples of state-of-the-art acid leaching recovery processes of LIBs.**

| Leaching agent (concentration) | Reducing agent | Leaching Temperature, °C | Leaching efficiency of d-elements, % | Reference |
|---|---|---|---|---|
| HCI (4N) | | 80 | 99 | [1], [2], [3] |
| H₂SO₄ (2N) | NaHSO₃ | 95 | -90 | [4] |
| H2SO4 (2N) | | 95 | 50-96 | [4] |
| H₂SO₄ (2N) | H₂O₂ | 95 | 80 | [4] |
| H₂SO₄ (4N) | | RT | 76 | [5] |
| H₂SO₄ (4N) | H₂O₂ | 80 | 99 | [3], [6] |
| H2SO4 (8N) | H₂O₂ | 70 | 99 | [7], [8] |
| H₂SO₄ (6N) | glucose | 95 | 96 | [9] |
| HNO₃ (1N) | | 75 | 40 | [10], [11] |
| HNO₃ (1N) | H₂O₂ | 75 | 99 | [12] |
| HNO₃ (10N) | | 75 | 80 | [13] |

However, all these processes of the above reactions (1) to (3) suffer from the poor kinetics of chemical transformations due to a slow Co³⁺ → Co²⁺ redox reaction (reactions (1) and (2)). Therefore, leaching rates and efficiency are often improved by the addition of reducing agents. Excellent leaching efficiency was found for hydrochloric acid in particular. However, when HCI is used, hazardous Cl₂ gas is produced due to the oxidation of HCl (reaction (3)).

Moreover, a mechanochemical pretreatment process was utilized in recent research prior to aqueous leaching of lithium of the reduced CAMs being performed as described in References [14] and [15]. Reference [15] describes that solvent-free processing can mechanochemically convert lithium cobaltate (LiCoO₂) into metallic Co and Li-derivatives via reduction reactions. Specifically, Reference [15] describes the mechanochemical treatment of battery constituents in the presence of reducing metals (e.g., Li, Ca, Al, etc.), which leads to the reduction of transition metal components of LIB cathodes into ferromagnetic products (Co, Ni, etc.) which can be effectively separated from other nonmagnetic and/or water-soluble by-products by magnetic separation techniques. The general reaction of this process for a LiCoO₂ cathode and Al as a reducing component can be described by the following reaction (4):

2LiCoO₂ + 2AI → Li₂O + 2Co + Al₂O₃ (4)

However, said processes were applied specifically for lithium recycling, while the remaining water insoluble byproducts, i.e., the ferromagnetic products, were separated and not used.

### References:

[1] P.W. Zhang, et.al., Hydrometallurgy 1998, 47, 259-271
[2] R. Wang, et.al., Hydrometallurgy 2009, 99, 194-201
[3] G. Granata, et.al., J. Power Sources 2012, 206, 393-401
[4] P. Meshram, et.al., JOM 2016, 68, 2613-2623
[5] L. Sun, et.al., J. Hazard. Mater. 2011, 194, 378-384
[6] J. Cheng, et.al., J. Clean. Prod. 2021, 316, 128279
[7] X. Min, et.al., J. Hazard. Mater. 2021, 406, 124743
[8] L. Chen, et.al., Hydrometallurgy 2011, 108, 80-86
[9] X. Chen, et.al., Waste Manage. 2018, 75, 459-468
[10] S. Castillo, et.al., J. Power Sources 2002, 112, 247-254
[11] R. Wang, et.al., Hydrometallurgy 2009, 99, 194-201
[12] C. Lee, et.al., J. Power Sources 2002, 109, 17-21
[13] C. Peng, et.al., J. Power Sources 2019, 415, 179-188
[14] O. Dolotko et. al., J. Alloys Compd., 2020, 824,153876
[15] US 2020/318219 A1

As can be seen, in all presently used recycling processes as described in References [1] to [13], pristine cathodes are chemically transformed into water-soluble salts. The challenge of these reactions is related to the high thermodynamic stability of cathode materials. Therefore, the state-of-the-art processes for recycling transition metals from LIBs require aggressive chemicals and severe temperature conditions in order to achieve sufficiently high recycling efficiency.

In view of the above, an object of the present invention is to overcome the above disadvantages of the methods for recycling d-elements from spent LIBs known from the prior art. In particular, the technical problem underlying the present invention is to provide a method for recycling transition metals from lithium-ion batteries having high efficiency while being simple and environmentally friendly.

The above technical problem underlying the present invention has been solved by providing the embodiments characterized in the claims.

In particular, the present invention provides a method for recycling transition metals from a lithium-ion battery, comprising the following steps:
(i) subjecting a cathode material of the lithium-ion battery containing a transition metal-containing compound in a cathode active material to a mechanical processing in the air in the presence of aluminum, thereby mechanochemically reducing the active cathode material;
(ii) subjecting the mechanochemically processed material of step (i) to an aqueous leaching by adding water, thereby providing an aqueous mixture including an insoluble fraction;
(iii) separating the insoluble fraction from the aqueous mixture, the insoluble fraction comprising a water-insoluble transition metal-containing material including reduced transition metal-containing compounds and/or reduced transition metals; and
(iv) dissolving the transition metal-containing material of the insoluble fraction obtained in step (iii) with a mineral acid, thereby providing an aqueous solution of transition metal salts,
wherein step (iv) of dissolving the transition metal-containing material is conducted at a temperature of about 10°C to about 50°C.

As will be described in more detail herein-below, the present invention provides a simple and highly effective dissolution of solid cathode materials and their transformation into solutions containing transition metal salts, suitable for further element separation. The method according to the present invention utilizes mechanochemical processing of the LIB waste as the pretreatment step, which includes the chemical interaction of the CAM with Al as a reducing component. In this step, d-elements, i.e., the target components of this recycling process, are chemically reduced to their lower electrochemical charging states, making the leaching process highly effective even at room temperature and low acid concentrations. In addition, the mechanochemical treatment, accompanied by chemical interaction, leads to a significant reduction of particle sizes, which has additional benefits for the kinetics of the dissolution process. The present invention, which significantly enhances the efficiency of the leaching process, is expected to increase the efficiency at a large scale, foster environmental sustainability, and reduce the overall cost of the LIB recycling process.

A LIB is a type of rechargeable battery composed of cells in which lithium ions move from the negative electrode (anode) through an electrolyte to the positive electrode (cathode) during discharge and back when charging. Li-ion cells use an intercalated lithium compound as the material at the cathode and typically graphite at the anode.

Many CAMs used for LIBs are constructed from cobalt-based materials, such as LiCoO₂ (LCO) or manganese-based materials, such as LiMn₂O₄ (LMO). However, also other manganese-based materials are known as cathodes for LIBs. For instance, the layered manganese oxides Li₂MnO₃, LiMnO₂, Li₂MnO₂, and combinations in terms of composites of the foregoing oxides are known in the art, which are also encompassed within the present invention. Besides, cathode materials based on lithium-nickel-manganese-cobalt oxides (NMC) having the general formula LiNiₓMn_{y}Co_{z}O₂, wherein the sum of x+y+z is 1, such as Li(Ni_{0.33}Mn_{0.33}Co_{0.33})O₂, as well as cathode materials based on lithium-nickel-cobalt-aluminum oxides (NCA) having the general formula LiNiₓCo_{y}-Al_{z}O₂, wherein the sum of x+y+z is 1, such as LiNi_{0.84}Co_{0.12}Al_{0.04}O₂ are known, which are also encompassed within the present invention.

As will be demonstrated for selected materials by the experimental section below, due to a similar mechanism, the method according to the present invention is advantageous to all said technologies without being limited to the specific materials mentioned above. Preferably, the cathode material used in the method of the present invention includes at least one material selected from the group consisting of LiCoO₂, Li(Ni_{0.33}Mn_{0.33}Co_{0.33})O₂ and LiMn₂O₄. This means that also mixtures of said cathode materials can be used.

As mentioned above, in the first step (i) of the method of the present invention, the cathode material of the LIB is subjected to mechanical processing in the air in the presence of aluminum, thereby mechanochemically reducing the CAM, i.e., the transition metal oxide of, for instance, LCO, LMO and NMC. This step can be carried out similarly to the process described in US 2020/318219 A1, provided that Al is used as a reducing component, allowing this step to be carried out under air. That is, no inert atmosphere is required.

The general reaction of this process step for LiCoO₂ cathodes is described in US 2020/318219 A1 by the reaction (4):

2LiCoO₂ + 2AI → Li₂O + 2Co + Al₂O₃ (4)

Metallic Co formed in said reaction (4) can be easily separated from the non-magnetic by-products via a magnetic separation process. As another reaction product, Li₂O is mentioned, which is soluble in water.

However, the mechanochemical reduction reaction of LiCoO₂ with Al as a reducing component can be described more appropriately by the following reaction equation (5), where feasible reaction intermediates are given in parentheses:

2LiCoO₂ + 2Al → 2Co + {Li₂O + Al₂O₃} (5)

In general terms, said reaction can be formulated by the following reaction equation (6):

2LiMO₂ + 2AI → 2M + {Li₂O + Al₂O₃} (6)

where M represents a transition metal or a composite thereof used in LIBs as cathode, such as Co, Mn, Ni, and composites thereof.

Accordingly, as can be taken from reaction equation (5) or (6), even though the molar ratio of the cathode material (such as LCO) in terms of M equivalents and Al in the mechanochemical processing step (i) is not limited, according to a preferred embodiment of the present invention, said constituents are used in a molar ratio in terms of M equivalents and Al of 1:3 to 2:1 depending on the transition metal or metal composite present in the starting cathode material. More preferably, said constituents are used in about an equimolar ratio, and most preferably in a molar ratio of 1:1 for LCO-Al, NMC-Al, and NCA-AI systems. For LMO-AI systems, it is preferred to use the constituents in a molar ratio of 1:2 to 1:3. Here, the expression "M equivalents" refers to the transition metal or metal composite present in the starting cathode material, such as Co, Mn, Ni, and composites thereof.

According to the present invention, Al is used as the reducing component in the mechanochemical reduction reaction of step (i). Al may be added to the cathode material of the LIB so as to adjust the molar ratio of the components. To assure the complete recycling, Al can be added to the reaction mixture in excess. Since an Al foil is commonly present as a current collector in LIB cathodes, it is also possible that no additional Al or at least a reduced amount of Al is required for the reduction. In view of providing an environmentally sustainable method of recycling the transition metals of LIBs, it is preferable that the aluminum at least partially stems from the current collector of the LIB. Generally, Al can be used in step (i) of the method of the present invention in the form of powder and/or as shredded Al scrap without being limited thereto.

Furthermore, the mechanical processing in the mechanochemical reduction reaction of step (i) can include, but is not limited to, ball milling, shredding, grinding, and/or extruding and combinations thereof, which can be generally used for processing LIB electrode materials. In order to achieve a suitable reaction of Al with the CAMs and to provide a mechanochemically processed material having a suitable particle size for further processing steps, it is preferable to employ ball milling. The ball milling as well as other mechanical processing techniques may be carried out until the reduction reaction has been completed, which may or may not be followed by analysis. For instance, due to its magnetic nature, metallic Co and its composites are easily attracted by a permanent magnet. Therefore, one of the visual signs of the reduction process of LiCoO₂ (which is nonmagnetic) is the formation of the magnetic phase. Reduction of Co in the LiCoO₂ by Al is started already after 30 minutes of milling, which is distinguishable by the appearance of the broad Bragg reflection at ~45° of 2θ, when being subjected to X-ray powder diffraction (XRD) measurement, and formation of the magnetic phase. Thus, the ball milling may be carried out for about 0.5 to 3 hours, depending on the milling conditions (balls to sample ratio, milling vial material, rotation speed in planetary mills, etc.).

The conditions may be those commonly applied. For instance, the starting materials (cathode material of the LIB and Al) can be combined in an appropriate molar ratio and ball-milled for 0.5 to 3 hours in a hardened-steel vial of appropriate size with steel balls using a shaker mill.

Even though not excluded, the mechanochemical processing step (i) of the present invention is preferably conducted in the absence of any additive and solvent to provide an environmentally sustainable method for recycling transition metals from LIBs at low cost. That is, in the mechanochemical processing step (i), only the cathode material of the LIB and Al are processed under air atmosphere, resulting in the reduction of the active cathode material (LCO, LMO, NMC, NCA etc.).

In view of the above, by incorporating the reduction reaction into a mechanical pretreatment of the spent LIBs, a significant simplification of the transition metal recycling procedure can be achieved. In particular, the particle size is decreased significantly, which enhances the efficiency of the subsequent processing steps.

According to the present invention, the particle size of the mechanochemically processed material of step (i), i.e., of the material to be subjected to the aqueous leaching step, is preferably 1 µm or less. The lower limit is not particularly limited and may be 0.01 µm or more. More preferably, the particle size is 0.9 µm or less and 0.1 µm or more, even more preferably 0.8 µm or less and 0.2 µm or more, and most preferably about 0.5 µm. According to the present invention, the particle size is determined by scanning electron microscopy (SEM) and means an average particle size. In particular, the average particle size is determined based on 20 particles, in which the longest diameter of each of said particles is taken as the particle size, followed by averaging the obtained values in terms of an arithmetic mean. The particle size can be measured by any suitable SEM device, such as MERLIN Scanning Electron Microscope from Carl Zeiss.

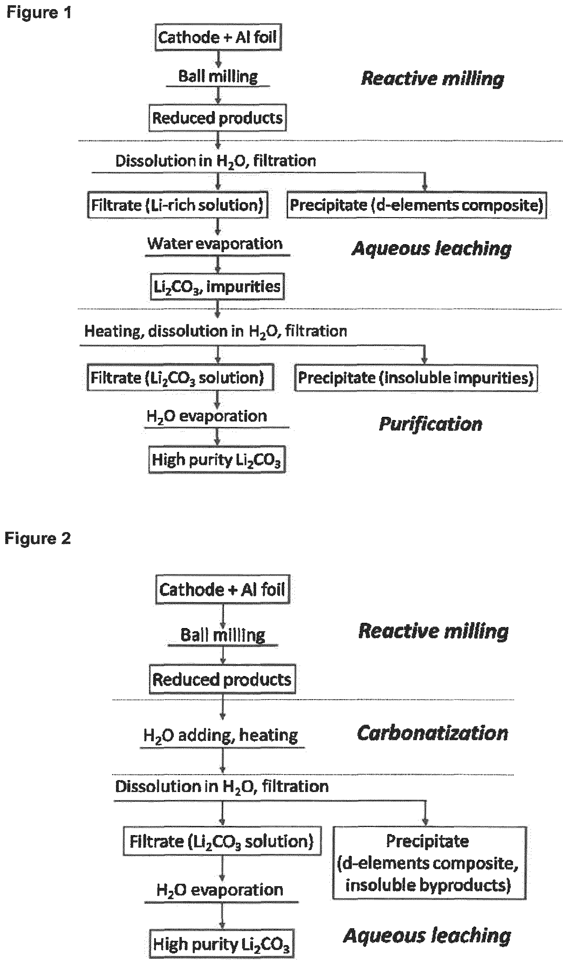

In the following, said subsequent processing steps (ii) to (iv) of the method according to the present invention are described in detail by reference to the Figures, particularly Figures 1 and 2, which show these steps in a schematic manner.

The Figures show:
**Figure 1** shows a flowsheet of steps (i) to (iii) of the recycling process of transition metals from spent LIBs according to the present invention, wherein the aqueous mixture in step (ii) is kept at room temperature
**Figure 2** shows a flowsheet of steps (i) to (iii) of the recycling process of transition metals from spent LIBs according to the present invention, wherein the aqueous mixture in step (ii) is heated to a temperature of 300°C or higher thereby conducting an optional carbonatization step.
**Figure 3** shows a comparison of the transition metal recycling efficiency for different cathode materials and mineral acids of Examples 1 to 36 for a dissolution process duration of 18 hours.
**Figure 4** shows a comparison of the transition metal recycling efficiency for different cathode materials, mineral acids, and different processes of Examples 37 to 54 for a dissolution process duration of 5 hours.

After the mechanochemical reduction reaction of step (i) ("reactive milling" in Figures 1 and 2), the processed material is subjected to an aqueous leaching step (ii). In the method of the present invention, lithium can be leached and recycled without applying any corrosive leachates in the aqueous leaching step (ii) since preferably only water is used. Here, it should be noted that the water is not particularly limited, and any technical grade of pure water can be used. Preferably, in order to minimize any byproducts, in the method of the present invention, deionized (DI) water is used throughout all process steps.

According to a preferred embodiment, no acids and no carbonate salt are used in the aqueous leaching step (ii). This means that in the method of the present invention, lithium can be separated from the insoluble transition metal composites without applying any corrosive or hazardous material. Also, contrary to the process described in US 2020/318219 A1, it is not necessary to add any carbonate salt in order to purify lithium carbonate (Li₂CO₃). In said process, an extra ion (Na⁺) has to be introduced at the precipitation stage, which can be avoided by the method of the present invention.

In view of ensuring low energy consumption, aqueous leaching is preferably performed at room temperature by adding water to the mechanochemically processed material (see "aqueous leaching" in Figure 1).

The present inventors have found that the reaction intermediates {Li₂O + Al₂O₃} shown in reaction equations (5) and (6) interact causing formation of γ-LiAlO₂. Moreover, the aqueous leaching process results in Li₂CO₃ and lithium aluminum carbonate hydroxide hydrate, Li₂Al₄(CO₃)(OH)₁₂·3H₂O (LACHH). In case it is aimed at recycling both the transition metals and the Li from the LIB wastes, aqueous leaching might also be performed at elevated temperatures (see "carbonatization" and "aqueous leaching" in Figure 2). The heating ("carbonatization") of the aqueous mixture significantly increases the Li yield in further processing steps of the filtrate which typically results in decreased cost of the process when aiming at recycling both the transition metals and the Li from the spent LIBs.

In view of the above, the aqueous leaching step (ii) of the method of the present invention may also include heating of the aqueous mixture to a temperature of 300°C or higher, thereby transforming LACHH into Li₂CO₃ and providing a mixture of dissolved Li₂CO₃. That is, the lithium compound present in the aqueous mixture is transformed into Li₂CO₃ by heating the sample to a temperature of 300°C or higher, preferably of 330°C to 370°C, and most preferably to 350°C under air atmosphere. The duration of this heating step is not particularly limited and may be 1 to 5 hours, such as about 3 hours. Under these conditions, LACHH mixed carbonate decomposes with the formation of Li₂CO₃ and Al₂O₃ as shown by the following reaction equation (7):

Li₂Al₄(CO₃)(OH)₁₂·3H₂O → Li₂CO₃ + 2Al₂O₃ + 9H₂O↑ (7)

The above-described heating in the aqueous leaching step (ii) is preferably carried out in a stepwise manner by heating the aqueous mixture to a temperature of 80°C to 100°C for 0.5 to 3 hours upon stirring, a step of aging the mixture by holding the mixture at a temperature of at least 60°C for at least 2 hours, and thereafter increasing the temperature to at least 300°C. In this regard, it should be noted that this heating step is preferably carried out in air. In the presence of CO₂ from the air and added H₂O, all lithium in the mixture transforms into Li₂CO₃ and LACHH compounds. Moreover, at a temperature of at least 300°C, the LACHH compound decomposes to Li₂CO₃ and Al₂O₃ (reaction equation (7)).

Thereafter, the heated sample is leached with water after cooling, leading to the dissolution of the Li₂CO₃. The high solubility rate of Li₂CO₃ at room temperature (which refers in the present invention to a temperature of 20°C to 25°C) allows performing this step at ambient conditions.

As explained above, the aqueous leaching step (ii) results in an aqueous mixture including dissolved Li compounds and an insoluble fraction comprising the water-insoluble transition metal-containing material including reduced transition metal-containing compounds and/or reduced transition metals and Al₂O₃. The reduced transition metal-containing compounds and/or reduced transition metals will be also referred to as "transition metals or composites thereof".

Thereafter, the insoluble fraction of the obtained aqueous mixture is separated from the filtrate in step (iii) of the method according to the present invention.

The method for separating the insoluble fraction comprising the transition metals or composites thereof from the filtrate comprising mainly soluble Li compounds is not particularly limited. However, in view of simplicity and cost effectivity, it is preferable to separate both fractions by filtration. In this context, any method for filtering the aqueous mixture known in the art may be performed.

Once the insoluble fraction has been separated from the filtrate, the comprised transition metals or composites thereof are dissolved in step (iv) of the method according to the present invention. In particular, mineral acids are added to the insoluble fraction, which dissolves the transition metals or composites thereof, thereby transferring said transition metals or composites thereof into an aqueous solution of transition metal salts, which are suitable for further usage. Thus, the dissolving step (iv) is not necessarily the final step of the method according to the present invention of recycling transition metals from LIB wastes.

The type of mineral acid is not particularly limited. However, it is preferred that the mineral acid is selected from HCl, HNO₃, H₂SO₄, and a mixture thereof. If said mineral acids are used, excellent dissolving efficiency of transition metals is found. By using at least one of said mineral acids, several reactions having different kinetics most probably occur during the dissolving of the transition metals or composites thereof, as is shown in reaction equations 8 to 16, where M represents a transition metal or a composite thereof used in LIBs as cathodes, such as Co, Mn, Ni, and composites thereof as above:

M + 2HCl → MCl₂ +H₂↑ (*fast*) (8)

MO + 2HCl → MCl₂ + H₂O (*slow*) (9)

Al₂O₃ + 6HCl → 2AlCl₃ + 3H₂O (*slow*) (10)

3M + 8HNO₃ → 3M(NO₃)₂ + 2NO ↑ + 4H₂O (*fast*) (11)

MO + 2HNO₃ → M(NO₃)₂ + H₂O (*slow*) (12)

Al₂O₃ + 6HNO₃ → 2Al(NO₃)₃ + 3H₂O (*slow*) (13)

M + H₂SO₄ → MSO₄ + H₂↑ (*fast*) (14)

MO + H₂SO₄ → MSO₄ + H₂O (*slow*) (15)

Al₂O₃ + 3H₂SO₄ → 2Al₂(SO₄)₃ + 3H₂O (*slow*) (16)

It should be noted that in the method according to the present invention, reaction with HCl proceeds under formation of H₂ or H₂O instead of Cl₂ (compare reaction equation 3 with equations 8 to 10). Thus, the formation of hazardous Cl₂ gas can be inhibited.

The concentration of the mineral acid is not particularly limited. Preferably, it is as low as possible, e.g., it is in a range of 0.25N to 6N. More preferably, the concentration of the mineral acid is 0.5N or more and 3N or less, more preferably 2N or less, even more preferably 1N or less, and particularly preferably it is in the range of 0.25N to 1N. If a mineral acid having a low concentration is used, cost and precautionary measures can be reduced. However, if the concentration of the mineral acid is too low, the efficiency of dissolving transition metals decreases. In case a mineral acid in the above concentration range is employed, effective dissolution of transition metals can be ensured. However, it should be noted that the concentration of the mineral acid depends on the type of mineral acid, on the starting cathode material used, i.e., on its structure and the transition metal to be dissolved, and on the particle size of the insoluble fraction.

As mentioned above, according to the present invention, the step (iv) of dissolving the transition metal-containing material (i.e., transition metals or composites thereof) is conducted at a temperature of about 10°C to about 50°C. This is a significant difference to the state-of-the-art processes for recycling transition metals from LIBs, which require aggressive chemicals and severer temperature conditions, such as at least 70°C, in order to achieve sufficiently high recycling efficiency. Further, in view of minimizing energy consumption, the dissolving step of the transition metals or composites thereof is preferably conducted at a temperature of about 15°C to about 40°C, more preferably at a temperature of about 15°C to about 30°C, and most preferably at room temperature (i.e., a temperature of 20°C to 25°C).

In a typical process, the duration of said dissolving step is not particularly limited and may be 1 hour or more, preferably at least 5 hours. In order to enhance the dissolution efficiency, the duration may be at least 10 hours or at least 15 hours, such as, for instance, 18 hours. Under these conditions, transition metals or composites thereof are efficiently dissolved by mineral acids. It should further be noted that the duration of the dissolving process depends on the type of mineral acid, on the starting cathode material used, i.e., on its structure and the transition metal to be dissolved, and on the particle size of the insoluble fraction.

In a preferred embodiment, the dissolving step (iv) of the method according to the present invention does not include using any reducing agent in addition to the insoluble fraction and the mineral acid. In this regard, it should be noted that such a reducing agent, which is not required in the present invention, refers to a reducing agent typically used in the state-of-the-art acid leaching recovery processes of LIBs, such as NaHSO₃, H₂O₂, or glucose.

Therefore, the method according to the present invention provides an excellent approach for recycling transition metals from LIBs. Compared to the state of the art, the present invention allows the reduction of the total cost of the process, and the technology becomes more robust and straightforward. In particular, high efficiency of transition metal recycling can be achieved by using low acid concentrations without heating or introducing reducing agents in the dissolving step (iv). The introduction of the mechanochemical pretreatment step (step (i)) decreases the amount of corrosive wastes, significantly simplifies the technology, and decreases the total cost of the hydrometallurgical recycling method.

The present invention is further illustrated by the following Examples without, however, being limited thereto.

### Examples

*The following materials were used in Examples 1 to 54 and Comparative Examples 1 to 27:*
LiCoO₂ (97 wt. %) was purchased from Alfa Aesar; LiMn₂O₄ (> 99%) was purchased from Sigma-Aldrich; and Li(Ni_{0.33}Mn_{0.33}Co_{0.33})O₂ was purchased from BASF, Germany. Aluminum foil (from Novelis) served as a source of Al in selected experiments. All materials were used as received.

### Examples 1 to 54:

Two types of pre-treated materials were used for dissolution of transition metals using a mineral acid. The schematic flowsheets presented in Figures 1 and 2 summarize two processes. In Process 1 (Figure 1), the material, after the reactive milling step, was dissolved in water, thus removing a majority of lithium from the mixture. Then, the remaining insoluble part, called "d-elements composite", which contains the mixture of Al₂O₃ and reduced metals, was used for further dissolution. In process 2 (Figure 2), material after the carbonatization step and water dissolution was used for the dissolution by a mineral acid. This material contains Al₂O₃, reduced metals, and a minor amount of metal oxides, which formed during the carbonatization step.

### a) Reactive milling:

About 2 g of a mixture of starting materials (LCO, NMC, or LMO plus Al foil) were combined in an appropriate molar ratio and ball-milled for 0.5-3 hours in a 65 ml hardened-steel vial with 20 g of steel balls using a SPEX 8000 shaker mill. The Al foil was cut into pieces of 1-2 cm sizes before the milling. All experiments were performed under air atmosphere. Data obtained by SEM shows that the average particle sizes of the ball-milled samples range from 0.1 µm to 1 µm.

### b) Aqueous leaching and separation:

The milled samples were combined with deionized (DI) water and stirred for a few minutes in the air. In Examples 1 to 45, the aqueous leaching was performed at room temperature.

In Examples 46 to 54, the ball-milled samples (about 1 g) were mixed with DI water (-50 ml) in a 200 ml beaker and heated to 90 °C for 1 hour upon stirring. After that, the sample in the beaker was left at 70 °C overnight. Next, the beaker with the sample was transferred to an oven and heated to 350 °C for 3 hours. Thereafter, the carbonized samples were combined with deionized (DI) water and stirred for a few minutes in the air.

Then, the insoluble fraction of the obtained mixture was filtered through a paper filter using a vacuum pump.

### c) Dissolution of the transition metals:

In all Examples, the transition metal dissolution was performed by providing 0.2 g of the respective insoluble fraction as starting material and by adding approximately 50 ml of the respective mineral acid to a 100 ml beaker. Thereafter, the mixture was kept stirring at room temperature for the durations listed in Table 2 below.

### Comparative Examples 1 to 27:

### Dissolution of the transition metals:

In all Comparative Examples, the pristine LCO, NMC, and LMO materials were used without reactive milling or aqueous leaching prior to dissolution by the mineral acid. In particular, the transition metal dissolution was performed by providing 0.2 g of the respective pristine LCO, NMC, or LMO as starting material and by adding approximately 50 ml of the respective mineral acid to a 100 ml beaker. Thereafter, the mixture was kept stirring at room temperature for the durations listed in Table 3 below.

### Transition metal dissolution efficiency

Dissolution of the insoluble fraction with a mineral acid was performed as described in detail above. After dissolution of the insoluble fraction containing transition metals, the remaining still insoluble fraction, i.e., the fraction not dissolved by the mineral acid, was collected and weighted. From the weight of the remaining insoluble fraction, the efficiency of dissolution was calculated which is listed in Tables 2 and 3 for all Examples and Comparative Examples. Here, the dissolution efficiency provided in % is determined from weighting experiments, thus, it is provided in weight %.

**Table 2. Examples according to the present invention.**

| Example | Mineral acid | Concentration of the mineral acid | Duration / h | Material | Carbonatization | Dissolution efficiency / % |
|---|---|---|---|---|---|---|
| 1 | HNO₃ | 6N | 18 | LCO | X | 99.4 |
| 2 | | 6N | | NMC | | 99.9 |
| 3 | | 6N | | LMO | | 97.2 |
| 4 | | 3N | | LCO | | 99.1 |
| 5 | | 3N | | NMC | | 99.8 |
| 6 | | 3N | | LMO | | 97.9 |
| 7 | | 1N | | LCO | | 98.2 |
| 8 | | 1N | | NMC | | 99.7 |
| 9 | | 1N | | LMO | | 98.3 |
| 10 | | 0.5N | | LCO | | 97.5 |
| 11 | | 0.5N | | NMC | | 99.6 |
| 12 | | 0.5N | | LMO | | 99.1 |
| 13 | H₂SO₄ | 6N | 18 | LCO | X | 99.1 |
| 14 | | 6N | | NMC | | 98.5 |
| 15 | | 6N | | LMO | | 98.2 |
| 16 | | 3N | | LCO NMC | | 98.7 |
| 17 | | 3N | | | | 98.9 |
| 18 | | 3N | | LMO | | 97.6 |
| 19 | | 1N | | LCO | | 98.4 |
| 20 | | 1N | | NMC | | 97.8 |
| 21 | | 1N | | LMO LCO | | 97.0 |
| 22 | | 0.5N | | | | 97.7 |
| 23 | | 0.5N | | NMC | | 97.5 |
| 24 | | 0.5N | | LMO | | 96.4 |
| 25 | HCI | 6N | 18 | LCO | X | 99.8 |
| 26 | | 6N | | NMC | | 99.9 |
| 27 | | 6N | | LMO | | 98.2 |
| 28 | | 3N | | LCO | | 99.7 |
| 29 | | 3N | | NMC | | 99.8 |
| 30 | | 3N | | LMO | | 97.4 |
| 31 | | 1N | | LCO | | 99.5 |
| 32 | | 1N | | NMC | | 99.7 |
| 33 | | 1N | | LMO | | 95.8 |
| 34 | | 0.5N | | LCO | | 99.0 |
| 35 | | 0.5N | | NMC | | 99.5 |
| 36 | | 0.5N | | LMO | | 94.5 |
| 37 | HNO₃ | 1N | 5 | LCO | X | 95.6 |
| 38 | | 1N | | NMC | | 91.6 |
| 39 | | 1N | | LMO LCO | | 79.2 |
| 40 | H2SO4 | 1N | | | | 87.5 |
| 41 | | 1N | | NMC | | 89.7 |
| 42 | | 1N | | LMO | | 81.0 |
| 43 | HCI | 1N | | LCO | | 84.2 |
| 44 | | 1N | | NMC | | 92.6 |
| 45 | | 1N | | LMO | | 73.1 |
| 46 | HNO₃ | 1N | 5 | LCO | O | 91.1 |
| 47 | | 1N | | NMC | | 90.1 |
| 48 | | 1N | | LMO | | 75.2 |
| 49 | H2SO4 | 1N | | LCO | | 81.7 |
| 50 | | 1N | | NMC | | 86.2 |
| 51 | | 1N | | LMO | | 72.3 |
| 52 | HCI | 1N | | LCO | | 85.2 |
| 53 | | 1N | | NMC | | 95.0 |
| 54 | | 1N | | LMO | | 69.8 |

**Table 3. Comparative Examples.**

| Comp. Example | Mineral acid | Concentration of the mineral acid | Duration / h | Material | Dissolution efficiency / % |
|---|---|---|---|---|---|
| 1 | HNO₃ | 6N | 18 | LCO | 30.9 |
| 2 | | 6N | | NMC | 20.1 |
| 3 | | 6N | | LMO | 24.5 |
| 4 | | 1N | | LCO | 36.5 |
| 5 | | 1N | | NMC | 30.2 |
| 6 | | 1N | | LMO | 23.3 |
| 7 | H2SO4 | 6N | 18 | LCO | 31.5 |
| 8 | | 6N | | NMC | 30.1 |
| 9 | | 6N | | LMO | 16.9 |
| 10 | | 1N | | LCO | 36.5 |
| 11 | | 1N | | NMC | 39.2 |
| 12 | | 1N | | LMO | 20.0 |
| 13 | HCl | 6N | i 18 | LCO | 50.4 |
| 14 | | 6N | | NMC | 95.0 |
| 15 | | 6N | | LMO | 98.9 |
| 16 | | 1N | | LCO | 41.9 |
| 17 | | 1N | | NMC | 49.2 |
| 18 | | 1N | | LMO | 35.5 |
| 19 | HNO₃ | 1N | 5 | LCO | 10.2 |
| 20 | | 1N | | NMC | 16.6 |
| 21 | | 1N | | LMO | 19.2 |
| 22 | H₂SO₄ | 1N | | LCO | 13.0 |
| 23 | | 1N | | NMC | 10.0 |
| 24 | | 1N | | LMO | 16.5 |
| 25 | HCI | 1N | | LCO | 39.6 |
| 26 | | 1N | | NMC | 39.1 |
| 27 | | 1N | | LMO | 23.6 |

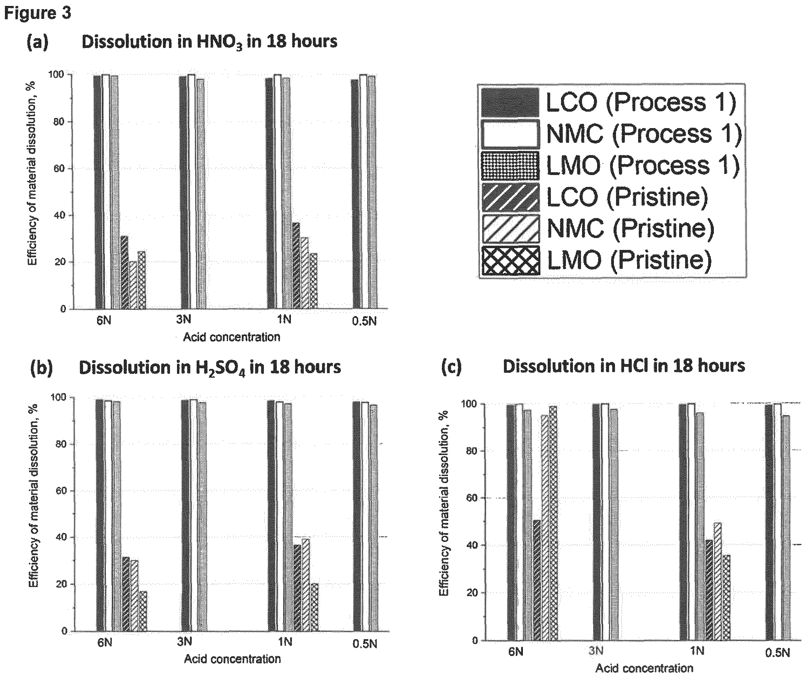

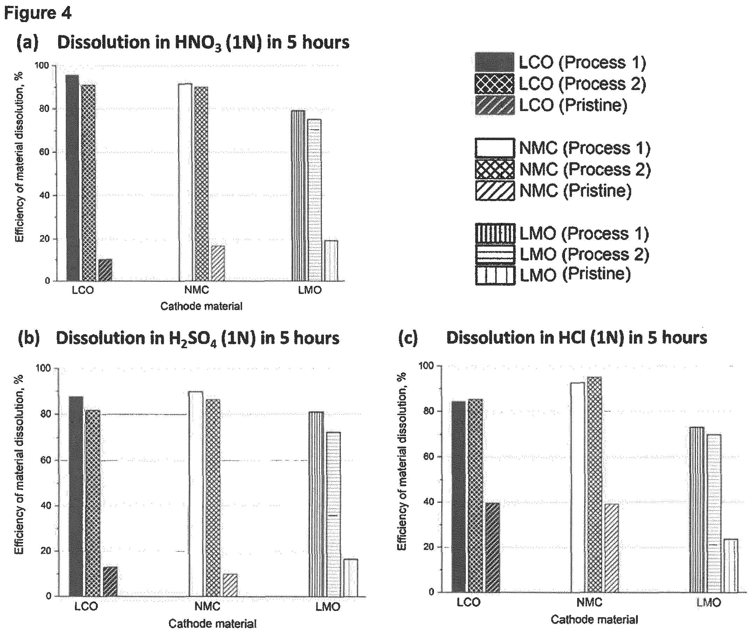

The dissolution efficiencies of all Examples and Comparative Examples are further shown in Figures 3 and 4. In Figure 3, the dissolution efficiencies of Examples 1 to 36 and Comparative Examples 1 to 18 are illustrated, i.e., the dissolution was performed for 18 hours using different cathode materials, mineral acids, and acid concentrations. In Figure 4, the dissolution efficiencies of Examples 37 to 54 and Comparative Examples 19 to 27 are illustrated, i.e., the dissolution was performed for 5 hours using different cathode materials, mineral acids, and aqueous leaching procedures. The terms "Process 1" and "Process 2" refer to the process of obtaining of the insoluble d-element composite as illustrated in Figures 1 and 2, respectively.

As shown in Figure 3, all three materials LCO, NMC, and LMO, pre-treated mechanochemically, were almost completely dissolved (Examples 1 to 36). Even a low acid concentration of 0.5N shows an efficiency of dissolution of 95-99% at room temperature. Under similar conditions, the solubility of the pristine materials of Comparative Examples 1 to 18 was poor. Only highly concentrated HCI shows the significant dissolution of pristine NMC and LMO (Comparative Examples 14 and 15). However, according to reaction equation 3, the release of the gaseous Cl₂ is expected during dissolution of these samples.

As shown in Figure 4, the efficiency of dissolution remained almost similar when dissolution was performed for 5 hours, independently on the pretreatment process applied to materials, i.e., independently of conduction of carbonatization. The minor decrease in the efficiency of the dissolution of the materials after carbonatization can be related to the presence of the more considerable amount of Al₂O₃ and metal oxides in the aqueous mixture having slow kinetics of leaching reactions (see reaction equations 9, 10, 12, 13, and 15 and 16). However, compared to the dissolution of the pristine cathode materials under equal conditions, the significant improvement of the leaching reactions of the pre-treated samples is evident.

In conclusion, a comparison of the Examples according to the present invention and the Comparative Examples shows a significant improvement in dissolution efficiency while being simple and environmentally friendly. In particular, no hazardous gases such as Cl₂ are produced, and dissolution efficiency remains high even at low acid concentrations and ambient temperature conditions.

## Claims

1. A method for recycling transition metals from a lithium-ion battery, comprising the following steps:
(i) subjecting a cathode material of the lithium-ion battery containing a transition metal-containing compound in a cathode active material to a mechanical processing in the air in the presence of aluminum, thereby mechanochemically reducing the active cathode material;
(ii) subjecting the mechanochemically processed material of step (i) to an aqueous leaching by adding water, thereby providing an aqueous mixture including an insoluble fraction;
(iii) separating the insoluble fraction from the aqueous mixture, the insoluble fraction comprising a water-insoluble transition metal-containing material including reduced transition metal-containing compounds and/or reduced transition metals; and
(iv) dissolving the transition metal-containing material of the insoluble fraction obtained in step (iii) with a mineral acid, thereby providing an aqueous solution of transition metal salts,
wherein step (iv) of dissolving the transition metal-containing material is conducted at a temperature of about 10°C to about 50°C.

2. The method for recycling transition metals from a lithium-ion battery according to claim 1, wherein the cathode active material comprises at least one of LiCoO₂, Li(Ni_{0.33}Mn_{0.33}Co_{0.33})O₂, and LiMn₂O₄.

3. The method for recycling transition metals from a lithium-ion battery according to claim 1 or 2, wherein in the mechanochemical processing step (i) the molar ratio of the cathode active material in terms of equivalents of the transition metals and aluminum is ranging from 1:3 to 2:1.

4. The method for recycling transition metals from a lithium-ion battery according to any one of claims 1 to 3, wherein in the mechanochemical processing step (i) the aluminum is added to the cathode active material of the lithium-ion battery and/or stems at least partially from the current collector of the lithium-ion battery.

5. The method for recycling transition metals from a lithium-ion battery according to any one of claims 1 to 4, wherein the mechanochemical processing step (i) includes ball milling.

6. The method for recycling transition metals from a lithium-ion battery according to any one of claims 1 to 5, wherein the average particle size of the mechanochemically processed material of step (i) is 1 µm or less.

7. The method for recycling transition metals from a lithium-ion battery according to any one of claims 1 to 6, wherein in the aqueous leaching step (ii) the mechanochemically processed material of step (i) is leached at room temperature.

8. The method for recycling transition metals from a lithium-ion battery according to any one of claims 1 to 6, wherein in the aqueous leaching step (ii) the aqueous mixture is heated to a temperature of 300 °C or higher followed by addition of water after cooling.

9. The method for recycling transition metals from a lithium-ion battery according to any one of claims 1 to 8, wherein in the aqueous leaching step (ii) water is the only reagent added to the mechanochemically processed material of step (i).

10. The method for recycling transition metals from a lithium-ion battery according to any one of claims 1 to 9, wherein the separation step (iii) includes filtering the insoluble fraction.

11. The method for recycling transition metals from a lithium-ion battery according to any one of claims 1 to 10, wherein the dissolving step (iv) is conducted at room temperature.

12. The method for recycling transition metals from a lithium-ion battery according to any one of claims 1 to 11, wherein in the dissolving step (iv) the mineral acid is selected from the group consisting of HCl, HNO₃, H₂SO₄, or a mixture thereof.

13. The method for recycling transition metals from a lithium-ion battery according to any one of claims 1 to 12, wherein in the dissolving step (iv) the mineral acid is added in a concentration ranging from 0.5N to 2N.

14. The method for recycling transition metals from a lithium-ion battery according to any one of claims 1 to 13, wherein in the dissolving step (iv) the insoluble fraction is stirred in the mineral acid for at least 5 hours.

15. The method for recycling transition metals from a lithium-ion battery according to any one of claims 1 to 14, wherein in the dissolving step (iv) the reaction mixture including the insoluble fraction and the mineral acid does not contain any reducing agent.
